# EUROPEAN PATENT APPLICATION

(11) **EP 3 885 120 A1**
(43) Date of publication of application: **29.09.2021**
(21) Application number: 20315050.3
(22) Date of filing: 25.03.2020
(51) Int. Cl.: B32B 1/08, H01B 7/28

(54) **SUBSEA POWER CABLE FOR LARGE WATER DEPTH AND MANUFACTURING METHOD FOR SUCH A SUBSEA POWER CABLE**

(71) Applicant: Nexans, 92400 Courbevoie (FR)
(72) Inventor: Johanson, Audun, 0653 Oslo (NO); Grorud, Bettina, 0653 Oslo1608 Fredrikstad (NO); Mauri, Massimiliano, 1739 Borgenhaugen (NO); Jørgensen. Simon, 1655 Sellebakk (NO)
(74) Representative: Ipsilon

(57) **Abstract**

A subsea power cable has been disclosed. The subsea power cable comprises a cable core (2) comprising an electrical conductor (3) and an electrically insulating layer (4) that is arranged radially outside of the electrical conductor (3); an intermediate layer (7) arranged radially outside of the electrically insulating layer (4); and a water barrier layer (5) arranged radially outside of the intermediate layer (7). The intermediate layer (7) comprising a material having a bulk modulus higher than 1 GPa. An outer sheath layer (6) may optionally be arranged radially outside of the water barrier layer (5). A corresponding method for manufacturing a subsea power cable (1) has also been disclosed.

## Description

### TECHNICAL FIELD

The invention relates to the technical field of subsea power cables. More specifically, the invention relates to a subsea power cable for large water depth and a method for manufacturing such a subsea power cable.

### BACKGROUND

There is a general need for subsea power cables to deliver electric power subsea. After deployment, subsea power cables for large water depths are exposed to high water pressure. Typically, they are also exposed to mechanical loads imposed during dynamic movements of the cable from wave motions and subsea currents.

Subsea power cables are usually required to have a water barrier layer to keep the cable core dry. The water barrier layer should completely block convection or diffusion of water, as an ingress of moisture can ultimately lead to a failure of the cable. A conventional water barrier layer is typically manufactured by a continuous or discontinuous extrusion of a seamless tube, and often comprises a lead or a lead alloy sheath. Alternatives to a lead sheath for the water barrier layer have also been suggested in the background art, including a longitudinally or helically folded laminate, as described in EP-2 437 272 B1, or a longitudinal welded sheathing, as described in EP-3 438 993 A1.

EP-3 438 993 A1 relates to a dynamic power cable and its manufacturing method. Figure 1 schematically illustrates an example of a cross section of such a power cable according to the background art. The cable 1 is shown with one cable core 2. The core 2 comprises an electrical conductor 3 arranged in the center of the core 2, and an electrically insulating layer 4 arranged radially outside the conductor 3. Outside the first electrically insulating layer 4, though not illustrated, there may be arranged a layer of sealing material disposed between the electrically insulating layer 4 and a water barrier layer 5. This sealing material swells upon contact with water thereby working as an extra redundancy measure to prevent ingress of moisture in case of a crack or other failure in the water barrier layer 5. The water barrier layer 5 is manufactured by arranging a metallic sheet wrapped around the cable core 2, and the opposing longitudinal edges of the metallic sheet are welded together. A polymer layer 6 is extruded radially outside the water barrier layer 5.

Subsea power cables according to the background art may be subject to radial collapse under extensive water pressure. Thus, it has been an objective to develop an improved subsea power cable for large water depth, which is less subject to radial collapse under extensive water pressure, and a corresponding manufacturing method.

### SUMMARY OF THE INVENTION

The present invention overcomes these problems by providing a subsea power cable, as defined in independent claim 1, comprising
- a cable core comprising an electrical conductor and an electrically insulating layer that is arranged radially outside of the electrical conductor;
- an intermediate layer arranged radially outside of the electrically insulating layer; and
- a water barrier layer arranged radially outside of the intermediate layer;
the intermediate layer comprising a material having a bulk modulus higher than 1 GPa.

The intermediate layer will thus absorb any residual spacing between the cable core and the water barrier layer when the cable is subjected to a reduction process, which can happen through drawing or rolling as part of the manufacturing process and through the subsea power cable being exposed to high water pressure during use. Thereby, the high water pressure is evenly counteracted over the water barrier layer which mitigates the risk of its radial collapse under extensive external water pressure when the cable is in use.

Dependent claims 2 and 3 relate to more preferable aspects of the bulk modulus of the material.

Dependent claims 4-15 relate to various advantageous aspects of the cable structure.

Dependent claims 16-19 relate to an embodiment of the invention where the intermediate layer comprises a tape.

Dependent claims 20-24 relate to another embodiment of the invention where the intermediate layer comprises a filling compound.

Independent claim 25 relates to a method of manufacturing a subsea power cable.

Dependent claims 26-29 relate to various advantageous aspects of manufacturing the subsea power cable.

### BRIEF DESCRIPTION OF THE DRAWINGS

Figure 1 is a schematic cross section of a subsea power cable according to the background art.
Figure 2 is a schematic cross section of a subsea power cable according to an embodiment of the invention.
Figure 3 is a schematic view illustrating further possible aspects of the subsea power cable.
Figure 4 is a schematic flow chart illustrating a method for manufacturing a subsea power cable for large water depth.

### DETAILED DESCRIPTION

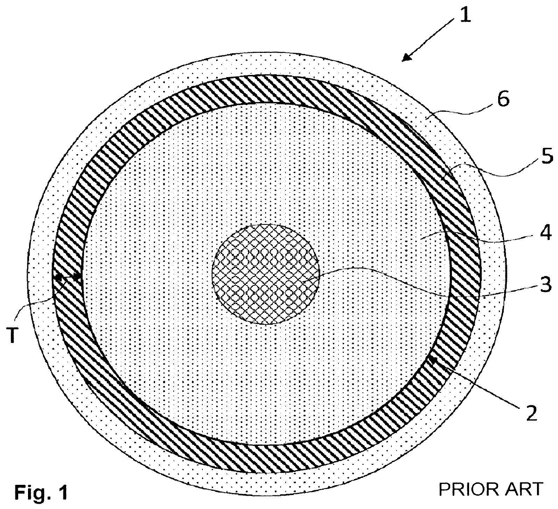

Figure 1 is a schematic cross section of a power cable according to the background art, as described in EP-3 438 993 A1, and has already been referred to in the Background section above.

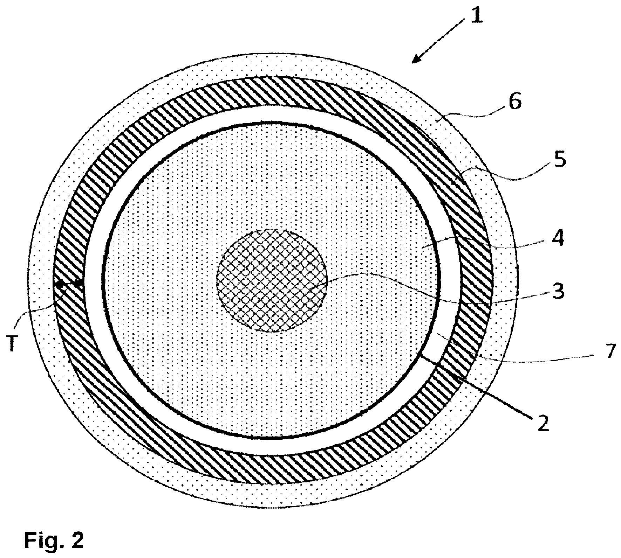

Figure 2 is a schematic cross section of a subsea power cable according to an embodiment of the invention.

The subsea power cable 1 is a subsea power cable for large water depth. In the context of the present invention, "large water depth" should be understood as a water depth of at least 250 m, or at least 500 m, or at least 750 m. Preferably, "large water depth" should be understood as a water depth of at least 500 m.

The cable core 2 comprises an electrical conductor 3, which may include a plurality of electrically conductive strands, e.g. copper strands, a semi-conductive layer and an electrically insulating layer 4, e.g. made from a polymeric material such as polyethylene or polypropylene, that is arranged radially outside of the electrical conductor 3. A semi-conductive layer may be arranged radially around outside the electrically insulating layer 4..

The construction of the cable core 2, with several concentrically arranged elements as described above, typically results in that the diameter of the cable core 2 varies along the cable's 1 longitudinal length. The radius of the cable core 2 may also vary along it's circumference at points along the longitudinal length of the cable core 2. Subsequently in the production process, a water barrier layer 5 is to be applied on to the cable core 2, such that it is arranged radially outside the cable core 2. The water barrier layer 5 will typically be required to have an inner diameter corresponding to the maximum outer diameter of the cable core 2 in order for it to be applied along the cable core 2. As a consequence of the uneven diameter of cable core 2 there will be areas of gaps along the cable 1 between the cable core 2 and the water barrier layer 5.

An intermediate layer 7 is therefore arranged radially outside of the electrically insulating layer 4. The intermediate layer 7 is configured so as to absorb residual spacing between the cable core 2 and the water barrier layer 5 when the subsea power cable is subject to reduction through drawing, rolling and/or compression from high water pressure due to the large water depth at which the cable 1 is located during use. Reduction is a process that usually occurs upon application of the water barrier layer 5 in a controlled manner through rolling or drawing. The rolling or drawing reduces the diameter of the water barrier layer 5 in order to minimize the number and size of areas of gaps between the water barrier layer 5 and the cable core 2. However, reduction of residual gaps will also occur from high water pressure as the cable is deployed at large depths.

Typically the diameter of the water barrier layer may be reduced between 1-5 mm in a controlled drawing or rolling process. Dependent on the efficacy of the drawing or rolling process, the size of the residual gaps may be reduced between 0.01-0.5 mm upon deployment of the cable at large water depth.

The intermediate layer 7 comprises a material that allows its shape and contents to adapt to the residual gaps formed along the cable 1. Thus, by filling out the residual gaps along the length of the cable core 2 and water barrier layer 5, the intermediate layer 7 ensures that the high water pressure is evenly counteracted over the water barrier layer 5 which mitigates the risk of its radial collapse under extensive external water pressure when the cable 1 is in use.

Further possible aspects and details of the intermediate layer 7 will be presented later in the present description. Advantageously, an outer sheath layer 6 is further arranged radially outside of the water barrier layer 5. The outer sheath layer 6 may, e.g., be a polymer layer 6 which is extruded radially outside the water barrier layer 5.

The subsea power cable 1 has been illustrated with one cable core 2, although a plurality of cable cores 2 may be provided in the cable 1. For instance, in a typical example, the subsea power cable may include three cable cores 2. In this case, a filler material may be provided to fill the space between the plurality of cable cores.

Advantageously, the intermediate layer 7 includes a material that has a bulk modulus within the range of 1 to 3 GPa in a temperature range of 0 to 90 °C. The bulk modulus of a material is a measure of how resistant to compression the material is. It is defined as the ratio of the infinitesimal pressure increase to the resulting relative decrease of the volume. The bulk modulus may be measured as set out in the ASTM D6793 - 02(2012) standard.

Advantageously, the intermediate layer 7 includes a material that provides a friction against the electrically insulating layer 4 and the water barrier layer 5 which is sufficiently high so as to avoid displacement of the intermediate layer 7 with respect to the electrically insulating layer 4 and the water barrier layer 5 when the subsea power cable 1 is deployed at a large water depth, i.e., when the subsea power cable is subject to high water pressure. This may be achieved by providing the intermediate layer 7 in a material which will have a higher coefficient of friction against the electrically insulating layer 4 and the water barrier layer 5, than the electrically insulating layer 4 would have against the water barrier layer 5.

The intermediate layer 7 may be configured to absorb residual spacing between the core and sheathing which could leave the final power phase susceptible to collapse under external water pressure due to large water depth. The intermediate layer will also increase the friction between the core and sheathing which will also increase the hydrostatic pressure resistance.

In an aspect, the intermediate layer 7 includes an electrically insulating material. In another aspect, the intermediate layer 7 includes an electrically conductive material. In one aspect, the intermediate layer 7 may be made of semi-conductive material.

In an aspect, the intermediate layer 7 may be made of at least one pre-impregnated tape. Such a pre-impregnated tape may for instance be a woven or non-woven tape made from cotton, hessian, rayon or similar fabric substrate. The tape may comprise a semi-conductive material. The fabric may be impregnated in a filling compound, or impregnation compound, including or constituted of either a three-components mixture of (1) a synthetic polymeric rubber (e.g., polyisobutylene, butyl rubber, polyester, polyisoprene and similar), (2) an inert filler, and (3) carbon black in various amount, e.g. 20-40% (by weight), or plastomer or elastomer-based bitumen.

The tape may typically have a thickness of between 0.02 and 1.0 mm, preferably between 0.02 and 0.04 mm, even more preferably 0.32 mm. The tape may have a fraction of the impregnation compound agent of 1- 99%. Advantageously, the fraction of impregnation compound may be 10-75%, and most preferably, the fraction of impregnation compound may be 20-50%.

In a preferable aspect, the intermediate layer 7 may comprise filling compound made of high molecular weight plasticizer, synthetic polymers and conductive filler, even more preferably a semi-conductive pumpable compound composed of butyl-rubber, polyisobutylene, reinforcing agent, carbon black and specially selected non-halogenated plasticizers (for example a commercial marketed as Tremco ®). Such a material is compatible with polyethylene and other thermoplastic materials. The material is preferably kept between two layers of semi-conductive textile, tape or fabric in a sandwich formation, thus saturating the textile, tape or fabric resulting in a slightly tacky surface which will still allow unwinding.

In another aspect, the intermediate layer 7 may be made by direct application of a filling compound. Such a filling compound may advantageously include either a three-components mixture of (1) synthetic polymeric rubber (polyisobutylene, butyl rubber, polyester, polyisoprene and similar) (2) and inert filler, and (3) carbon black in various amount (e.g. 20-40% (by weight)), is preheated and pumped into an application head where the material is distributed in a controlled manner directly onto the cable core.

Due to high temperature, typically around 50-120□ Celsius, the filling compound might adhere to the cable core which improves the pressure resistance. The compound may preferably have a viscosity between 2000-200 000 η for a temperature range of 15-70□ Celsius. Even more preferably the filling compound has a viscosity between 15-70 η for a temperature range of 15-70□ Celsius.

The application head could be directly connected to a die with specific diameter to remove any excess material. The filling compound agent can also be applied by a spray solution to facilitate re-distribution during the reduction stage.

The filling compound agent will redistribute due to its high viscosity and/or low shear modulus and saturate any residual voids/spacing when the water barrier layer 5 undergoes is reduction during drawing, rolling and/or due to high subsea pressure.

In aspects where a filling compound agent is used, the water barrier layer 5 may also undergo reduction due to a compression of the filling compound as it is subjected to high water pressure during use. However, the agent will in such cases also provide an advantageous distribution thereby ensuring the high water pressure is evenly counteracted.

In still another aspect, the intermediate layer 7 may include a tape having a bulk modulus of above 1 GPa. Preferably, the tape has a bulk modulus of above 2 GPa. Simultaneously, or in another aspect, the tape may have a shear modulus below 0.2. Preferably, the tape has a shear modulus below 0.001.

Such a high bulk modulus and low shear modulus tape may be a tape with thickness between 0.05 and 1.0 mm of a material selected from the group consisting of polyisobutylene, butyl rubber, silicon rubber, neoprene, polyisoprene, EPR, although other tape materials may also be applicable. The tape may be applied in a helically manner on the cable core prior to the sheathing process. The tape of the indicated materials will have a low shear modulus. The agent will redistribute due to its high viscosity and/ or low shear modulus and saturate any residual voids/ spacing if the water barrier layer 5 is reduced during drawing, rolling and/or due to high subsea pressure.

In any of the above options for the intermediate layer 7, the intermediate layer 7 may be insulating or conductive. The latter may for instance be achieved by adding between carbon black to the material of the intermediate layer 7. For instance, 20-40% (by weight) of carbon black may be added to the material of the intermediate layer 7.

In any of the above options for the intermediate layer 7, the thickness of the layer may generally correspond to the maximum expected spacing/void between the cable core and water barrier layer 5 after final application of the water barrier layer 5 and reduction of the cable due to drawing, rolling and/or high subsea pressure.).

In an aspect, the water barrier layer 5 includes a longitudinally welded sheathing. In this aspect, the sheathing material, i.e., the material of the water barrier layer, may include an exogenous or autogenously welded Al, Cu or Fe alloy. The sheathing may generally be manufactured by forming a pre-cursor metal strip around the cable core welding the edges. The diameter of the welded sheath is thereby reduced by either drawing or rolling. In this aspect the intermediate layer 7 preferentially absorbs between 60 % and 100 % of the total residual gaps after cable is reduced through drawing, rolling and/or high subsea pressure.

In an alternative aspect, the water barrier layer 5 includes a longitudinally or helically folded laminate. In this aspect, the laminate may include a 2-dimensional polymer- metal- polymers structure. The polymer layers may e.g. consist of 30-100 µm semiconductive polyethylene, while the metal foil may e.g. consist of a 5-100 µm thick layer of Al, Cu or Fe alloy. The laminate may generally be manufactured by folding the laminate helically or longitudinally around the cable core before the overlapped regions are fused by an external heat source such as from extrusion of an PE sheath directly onto the folded laminate. The laminate might be reduced by drawing or rolling before or after fusing the overlapping regions if all spacings cannot be removed during the folding process. The spacings are also absorbed by the intermediate layer 7 upon reduction of the cable from drawing, rolling and/or high subsea pressure.

In still an alternative aspect, the water barrier layer 5 includes an extruded lead alloy sheath. In this aspect, the water barrier layer may include a continuously extruded lead sheath from raw material such as presented in the European standard "Lead and lead alloys - Lead alloy ingots for electric cable sheathing and for sleeves", known as EN 12548. The sheathing diameter can be reduced after extrusion by drawing or rolling to remove spacings. The spacings are also absorbed by the intermediate layer 7 upon reduction of the cable from drawing, rolling and/or high subsea pressure.

The cable 1 may comprise additional layers, or filling material, arranged radially outside each conductor 3 or the at least one cable core 2. These layers and materials may be arranged inside, in-between or outside the already mentioned layers herein, and may comprise for example additional insulating, semiconducting, conducting, shielding and armouring layers. The subsea power cable 1 may also include additional electrical conductors, optical waveguides, etc.

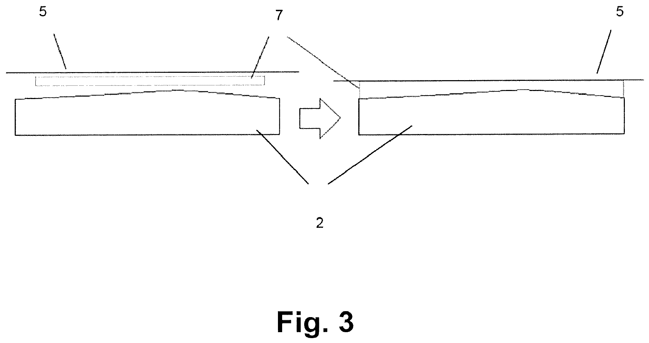

Figure 3 is a schematic view illustrating further possible aspects of the power cable.

Figure 3 shows schematically two side views of a section of the subsea power cable. To the left in figure 3 is an illustration of a situation before a reduction stage, while the illustration to the right in figure 3 shows a situation after a reduction stage. The reduction stage is indicated by the right arrow in figure 3. The reduction stage corresponds to either a drawing or rolling process to reduce the diameter of the sheathing as it is applied and/or the radial reduction due to a process of subjecting the subsea power cable to high water pressure at large water depth.

The cable core 2 is illustrated as having an irregular outer surface, i.e, upwards on figure 3. An intermediate layer 7 provided between the cable core 2 and the water barrier layer 5. Before the reduction stage, to the left in figure 3, there are spaces between the intermediate layer 7 and the cable core 2 and the water barrier layer 5. After the reduction stage, the intermediate layer absorbs residual spacing between the cable core 2 and the water barrier layer 5.

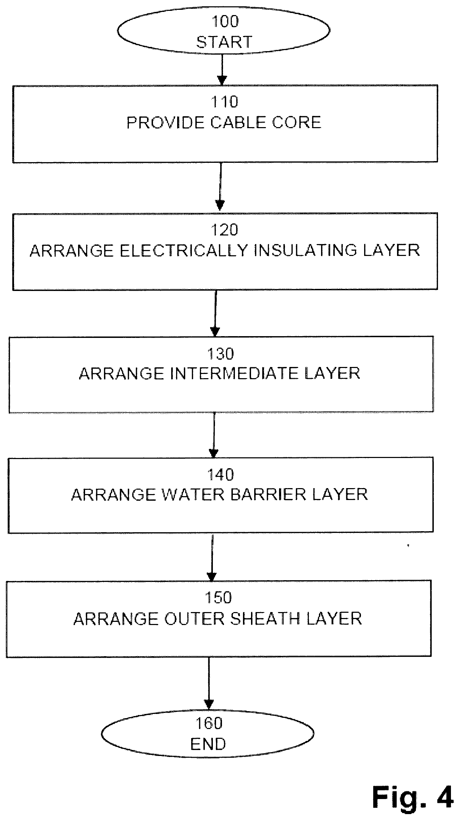

Figure 4 is a schematic flow chart illustrating a method for manufacturing a subsea power cable for large water depth. Further details of the method will also be understood from figures 2 and 3 and their corresponding detailed description.

The method starts at the initiating step 100.

First, in the cable core providing step 110, a cable core 2 comprising an electrical conductor 3 is provided.

Next, in the insulating layer arranging step 120, an electrically insulating layer 4 is arranged radially outside of the electrical conductor 3.

Next, in the intermediate layer arranging step 130, an intermediate layer 7 is arranged radially outside of the electrically insulating layer 4. In the intermediate layer arranging step 130, the intermediate layer 7 is configured so as to absorb residual spacing between the cable core 2 and the water barrier layer 5 when the subsea power cable is subject to drawing, rolling and/or high water pressure. Further details of the intermediate layer and the intermediate layer step will be apparent from figures 2 and 3 and their detailed description above.

Next, in the water barrier layer arranging step 140, a water barrier layer 5 is arranged radially outside of the intermediate layer 7.

The water barrier layer arranging step 140 may include longitudinally welding a sheathing, or folding a laminate longitudinally or helically, or providing an extruded lead sheath, as has been explained above with reference to figure 2.

Next, in the optional outer sheath layer arranging step, an outer sheath layer 6 is arranged radially outside of the water barrier layer 5.

The disclosed subsea power cable and the disclosed manufacturing method are useful in subsea applications where there is a need for subsea power cables at large water depths, which require a dry design, and which is useful for high voltages, i.e., voltages of at least 36 kV or at least 72 kV.

## Claims

1. A subsea power cable (1), the subsea power cable comprising:
- a cable core (2) comprising an electrical conductor (3) and an electrically insulating layer (4) that is arranged radially outside of the electrical conductor (3);
- an intermediate layer (7) arranged radially outside of the electrically insulating layer (4); and
- a water barrier layer (5) arranged radially outside of the intermediate layer (7);the intermediate layer (7) comprising a material having a bulk modulus higher than 1 GPa.

2. The subsea power cable (1) according to claim 1, wherein the bulk modulus is higher than 2 GPa.

3. The subsea power cable (1) according to claim 1 or 2, wherein the bulk modulus is between 2-3 GPa.

4. The subsea power cable (1) according to any of the preceding claims,
further comprising an outer sheath layer (6) arranged radially outside of the water barrier layer (5).

5. The subsea power cable (1) according to any of the preceding claims, wherein the intermediate layer (7) includes a material that has a bulk modulus within the range of 1 to 3 GPa in a temperature range of 0 to 70 °C.

6. The subsea power cable (1) according to any of the preceding claims, wherein the intermediate layer (7) includes an electrically insulating material.

7. The subsea power cable (1) according to any of the preceding claims, wherein the intermediate layer (7) includes an electrically conductive material.

8. The subsea power cable (1) according to any of the preceding claims, wherein the water barrier layer comprises a material comprising an Al, Cu or Fe alloy.

9. The subsea power cable (1) according to any of the preceding claims, wherein the water barrier layer (5) includes a longitudinally welded sheathing.

10. The subsea power cable (1) according to any of claims 1-8, wherein the water barrier layer (5) includes a longitudinally or helically folded laminate.

11. The subsea power cable (1) according to any of claims 1-8, wherein the water barrier layer (5) includes an extruded lead sheath.

12. The subsea power cable (1) according to any of the preceding claims, wherein the intermediate layer (7) comprises a semi-conductive material.

13. The subsea power cable (1) according to any of the preceding claims, wherein the intermediate layer (7) comprises a woven or non-woven cotton, hessian or rayon fabric substrate.

14. The subsea power cable (1) according to any of the preceding claims, wherein the intermediate layer (7) comprises a material selected from the group consisting of polyisobutylene, butyl rubber, silicon rubber, neoprene, polyisoprene and EPR.

15. The subsea power cable (1) according to any of the preceding claims, wherein the intermediate layer (7) has a thickness between 0.05 and 1.0 mm.

16. The subsea power cable (1) according to any of the preceding claims, wherein the intermediate layer (7) comprises at least one tape.

17. The subsea power cable (1) according to claim 16, wherein the tape is of a pre-impregnated kind.

18. The subsea power cable (1) according to any of claims 16-17, wherein the tape has a shear modulus below 0.2 GPa.

19. The subsea power cable (1) according to claim 18, wherein tape has a shear modulus below 0.001 GPa.

20. The subsea power cable (1) according to one of the preceding claims, wherein the intermediate layer (7) comprises a filling compound.

21. The subsea power cable (1) according to claim 20, wherein filling compound has a viscosity between 2000-200 000 η.

22. The subsea power cable (1) according to claim 21, wherein the filling compound has a viscosity between 15-70 η.

23. The subsea power cable (1)according to any of claims 20-22, wherein the filling compound comprises a high molecular weight plasticizer, synthetic polymers and conductive filler.

24. The subsea power cable (1) according to claim 23, wherein the filling compound is semi-conductive pumpable compound composed of butyl-rubber, polyisobutylene, reinforcing agent, carbon black and specially selected non-halogenated plasticizers.

25. A method for manufacturing a subsea power cable (1), the method comprising:
- providing a cable core (2) comprising an electrical conductor (3)
- arranging an electrically insulating layer (4) radially outside of the electrical conductor (3);
- arranging an intermediate layer (7) radially outside of the electrically insulating layer (4); and
- arranging a water barrier layer (5) radially outside of the intermediate layer (7); the intermediate layer (7) comprising a material having a bulk modulus higher than 1 GPa.

26. The method for manufacturing a subsea power cable (1) according to claim 25, further comprising arranging an outer sheath layer (6) radially outside of the water barrier layer (5).

27. The method for manufacturing a subsea power cable (1) according to one of the claims 25-26 wherein the step of arranging the water barrier layer (5) includes longitudinally welding a sheathing.

28. The method for manufacturing a subsea power cable (1) according to one of the claims 25-26, wherein the step of arranging the water barrier layer (5) includes folding a laminate longitudinally or helically.

29. A method for manufacturing a subsea power cable (1) according to one of the claims 25-26, wherein the step of arranging the water barrier layer (5) includes providing an extruded lead sheath.
